# EUROPÄISCHE PATENTANMELDUNG

(11) **EP 1 885 049 A1**
(43) Veröffentlichungstag der Anmeldung: **06.02.2008**
(21) Anmeldenummer: 07109504.6
(22) Anmeldetag: 04.06.2007
(51) Int. Cl.: H02M 3/155, H02M 3/156

(54) **Netzteil mit kombiniertem Aufwärts/Abwärts-Schaltwandler**

(30) Priorität: 27.07.2006 DE 102006034804
(71) Anmelder: ROBERT BOSCH GMBH, 70442 Stuttgart (DE)
(72) Erfinder: Koerner, Gotthilf, 71287 Weissach (DE); Rupp, Andreas, 74613 Oehringen (DE); Geffke, Tomas, 72800 Eningen (DE); Buhmann, Mitja, 69242 Rettigheim (DE)

(57) **Zusammenfassung**

Die Erfindung betrifft ein Netzteil (1) zum Wandeln einer Eingangsspannung (VB) in eine Ausgangsspannung (U3V, U1V5, U5V, UVB), die niedriger ist als die Eingangsspannung (VB), mit einem Schaltwandler (2), der eine Induktivität (L) und mehrere Schalter (T1,T2) umfasst, mit denen die Induktivität (L) gegen ein Versorgungspotential (V2) oder ein Bezugspotential (GND) geschaltet werden kann. Der Schaltwandler (2) wird in einem Normalbetrieb als Abwärtswandler betrieben. Spannungsempfindliche Verbraucher können auch bei einem Spannungseinbruch der Versorgungsspannung (VB) mit ausreichender Spannung versorgt werden, wenn der Schaltwandler (2) in diesem Fall in einen Notbetrieb umgeschaltet wird, in dem der Schaltwandler (2) als Aufwärtswandler betrieben wird.

## Beschreibung

### Stand der Technik

Die Erfindung betrifft ein Netzteil, insbesondere ein Mehrspannungsnetzteil, gemäß dem Oberbegriff des Patentanspruchs 1, sowie die Verwendung eines solchen Netzteils gemäß dem Oberbegriff des Patentanspruchs 11.

Schaltnetzteile auf die im Folgenden Bezug genommen wird, dienen zum Wandeln einer elektrischen Eingangsgröße, insbesondere einer Gleichspannung oder eines Gleichstroms, in eine entsprechende Ausgangsgröße, deren Amplitude je nach Art des Netzteils entweder höher oder niedriger sein kann als die Eingangsspannung. Die hier betrachteten Schaltnetzteile umfassen eine Induktivität und mehrere Schalter, mit denen die Induktivität abwechselnd gegen ein Versorgungspotential und ein Referenzpotential (meist Masse) geschaltet wird. Die Schalter werden üblicherweise von einem Spannungsregler angesteuert, der in einem Steuergerät integriert ist und die Ausgangsspannung oder den Ausgangsstrom auf einen vorgegebenen Wert regelt. Derartige Schaltnetzteile werden unter anderem in Kfz-Bordnetzen eingesetzt, um verschiedenste elektrische Verbraucher mit unterschiedlichen Spannungen zu versorgen.

Moderne Bordnetze umfassen üblicherweise eine ganze Reihe von Verbrauchern, wie z.B. ASICs, Mikrocontroller etc., die bei verschiedenen Versorgungsspannungen arbeiten, die niedriger sind als die Versorgungsspannung (so genannte Niederspannungsverbraucher). Solche Bordnetze umfassen daher einen Abwärtswandler, der die Batteriespannung von beispielsweise 13V in eine niedrigere Spannung von z.B. 5V oder 3,3V wandelt. Ein Mangel solcher Kfz-Bordnetze besteht darin, dass die Energieversorgung bestimmter Verbraucher bei einem Spannungseinbruch auf Werte unter 7V bis 8V nicht mehr gewährleistet werden kann. Um den Ausfall sicherheitsrelevanter Systeme und insbesondere Steuergeräte im Falle einer Unterspannung zu verhindern, könnte ein Aufwärts-Schaltwandler in die Energieversorgung des Kfz-Bordnetzes integriert werden. Dies ist jedoch relativ aufwendig und bringt erhebliche Zusatzkosten für Bauelemente, insbesondere für eine zusätzliche Induktivität, mit sich.

### Offenbarung der Erfindung

Es ist daher die Aufgabe der vorliegenden Erfindung, ein Netzteil, insbesondere ein Schaltnetzteil zu schaffen, das die Energieversorgung der Verbraucher auch bei Unterspannung sicherstellt, aber wesentlich einfacher aufgebaut und kostengünstiger ist.

Gelöst wird diese Aufgabe gemäß der Erfindung durch die im Patentanspruch 1, sowie im Patentanspruch 11 angegebenen Merkmale. Weitere Ausgestaltungen der Erfindung sind Gegenstand von Unteransprüchen.

Ein wesentlicher Aspekt der Erfindung besteht darin, ein Netzteil mit einem Schaltwandler zu schaffen, der zwischen einem Betrieb als Abwärtswandler und einem Betrieb als Aufwärtswandler umschaltbar ist. Wenn die Versorgungsspannung höher ist als ein vorgegebener Schwellenwert (z. B. 8V), wird der Schaltwandler als Abwärtswandler betrieben (Normalbetrieb bzw. erste Betriebsart) und erzeugt somit eine Ausgangsspannung, die niedriger ist als die Eingangsspannung (z. B. 13V). Bei einem Spannungseinbruch, bei dem die Spannung unter den Schwellenwert sinkt, wird der Schaltwandler dagegen als Aufwärtswandler betrieben und erzeugt somit eine Ausgangsspannung, die höher ist als die Eingangsspannung (Notbetrieb bzw. zweite Betriebsart). Spannungsempfindliche Verbraucher, wie z.B. ASICs oder Steuergeräte, die aus sicherheitstechnischen Gründen nicht ausfallen dürfen, können somit zumindest in der zweiten Betriebsart noch mit Spannung versorgt werden.

Gemäß einer bevorzugten Ausführungsform der Erfindung umfasst das Netzteil eine Schalter-Anordnung, mittels der die Versorgungsspannung wahlweise an den Eingang oder den Ausgang (bzw. anderen Eingang) des Schaltwandlers gelegt werden kann. Im Normalbetrieb ist die Schalter-Anordnung vorzugsweise so geschaltet, dass die Versorgungsspannung am Eingang des Abwärtswandlers, und in der zweiten Betriebsart am Eingang des Aufwärtswandlers anliegt (der zuvor der Ausgang des Abwärtswandlers war). Der Strom fließt im Abwärts- und Aufwärtsbetrieb also in entgegengesetzte Richtungen durch die Induktivität. Der Ausgang des Wandlers ist in jeder Betriebsart von der Eingangsspannung getrennt.

Vorzugsweise umfasst die Schalter-Anordnung wenigstens zwei Schalter, von denen der eine mit einer Versorgungsspannung und dem Eingang, und der andere mit der Versorgungsspannung und dem Ausgang (bzw. anderen Eingang) des Schaltwandlers verbunden ist.

Bei dem Schaltwandler handelt es sich vorzugsweise um einen an sich bekannten Wandler mit einer Induktivität und zwei seriell angeordneten Schaltern, von denen einer an der Versorgungsspannung und der andere an einer Referenzspannung (meist Masse) angeschlossen ist. Die Induktivität ist vorzugsweise an einem Mittenknoten zwischen den beiden Schaltern angeschlossen. Die beiden Schalter des Schaltwandlers werden vorzugsweise gegensinnig geschaltet.

Am Ausgang des Abwärtswandlers ist vorzugsweise ein Linearregler angeschlossen, der die an seinem Eingang anliegende Spannung auf eine gewünschte niedrigere Spannung (z. B. 3,3V) regelt. Der Abwärtswandler wird im Normalbetrieb vorzugsweise so betrieben, dass er eine Spannung erzeugt, die möglichst nahe an der Nennspannung (z. B. 3,3V) der am Linearregler angeschlossenen Niederspannungsverbraucher liegt. Dadurch können die Schaltverluste des nachgeordneten Linearreglers minimiert werden. Die Ausgangsspannung des Abwärtswandlers kann daher auch als Vorregelspannung bezeichnet werden. Bei 3,3V-Verbrauchern kann sie z. B. 4V betragen.

Am Ausgang des Linearreglers kann ein weiterer Linearregler angeschlossen sein, der die Ausgangsspannung des ersten Linearreglers in eine noch niedrigere Spannung, z.B. 1,5V, wandelt.

Wie vorstehend erwähnt, ist ein Schalter vorgesehen, mit dem die Versorgungsspannung im Notbetrieb auf den anderen Eingang des Wandlers umgeschaltet werden kann. Dieser Schalter kann bei Versorgungsspannungen, die deutlich niedriger sind als die Batterie-Nennspannung (z. B. 13V), jedoch den vorgegebenen Schwellenwert (z. B. 8V) nicht unterschreiten, auch in einem Sourcefolge-Modus betrieben werden. Die Spannung am Ausgang des Schalters kann so auf eine gewünschte niedrigere Spannung (z. B. 4V) geregelt werden, wobei jedoch eine gewisse Verlustleistung hinzunehmen ist. Der Abwärtswandler ist in diesem Fall vorzugsweise inaktiv geschaltet. Die Abwärts-Wandlung wird nur mittels des Sourcefolgers durchgeführt.

Die erfindungsgemäße Vorrichtung umfasst vorzugsweise auch einen Linearregler, der parallel zum Schaltwandler angeordnet ist und die Versorgungsspannung in eine niedrigere Spannung wandelt. Am Ausgang dieses Linearreglers sind vorzugsweise diejenigen Niedervoltverbraucher mit der höchsten Nennspannung (z. B. 5V) angeschlossen. Diese Verbraucher werden bei Unterspannung vorzugsweise über den Aufwärtswandler versorgt.

Die Schalter des Netzteils sind vorzugsweise als Transistoren, insbesondere MOSFET-Transistoren realisiert.

### Kurze Beschreibung der Zeichnungen

Die Erfindung wird nachstehend anhand der beigefügten Zeichnungen beispielhaft näher erläutert. Es zeigen:

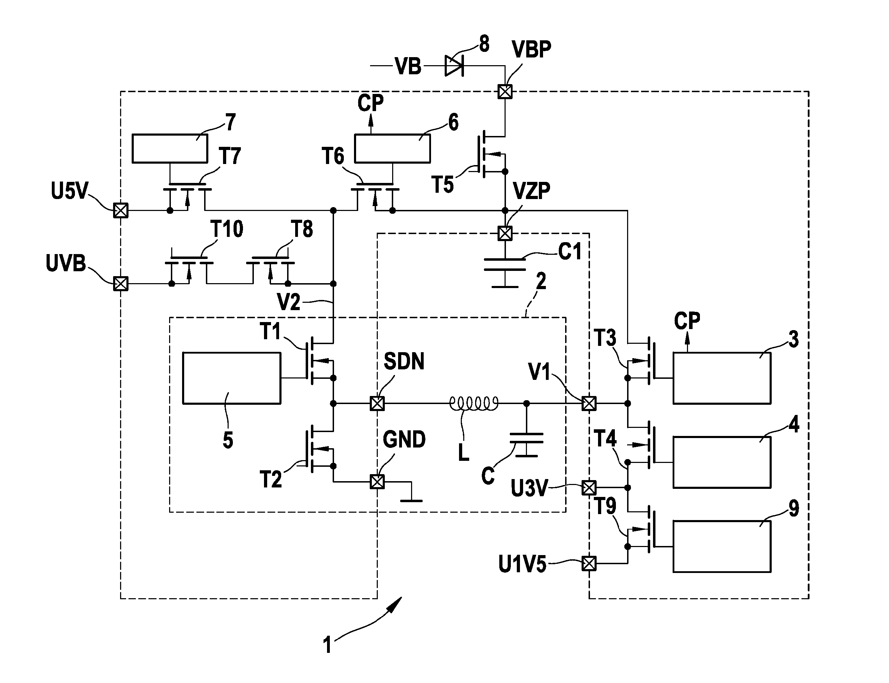

- Fig. 1: ein schematisches Blockschaltbild eines Netzteils mit einem kombinierten Abwärts/Aufwärts-Schaltwandler.

### Ausführungsform der Erfindung

Fig. 1 zeigt eine schematische Darstellung eines Mehrspannungs-Netzteils 1 zur Versorgung verschiedener elektrischer Verbraucher mit unterschiedlichen Nennspannungen. Das Netzteil 1 hat in diesem Ausführungsbeispiel einen Ausgang U5V an dem eine Spannung von 5V ausgegeben wird, einen Ausgang U3V für 3,3V-Verbraucher und einen Ausgang U1V5 für 1,5V- Verbraucher. An den Ausgängen können verschiedene Verbraucher, wie z.B. ICs, Steuergeräte oder andere Bauelemente mit entsprechender Nennspannung angeschlossen sein. Die Versorgungsspannung VB (Batteriespannung) wird dem Netzteil 1 über eine Diode 6 am Eingang VBP zugeführt.

Das Netzteil 1 ist hier als IC realisiert und kann mittels eines am Eingang VBP angeschlossenen Hauptschalters T5 ein- bzw. ausgeschaltet werden.

Zur Erzeugung der verschiedenen Ausgangsspannungen (hier: 5V, 3,3V und 1,5V) sind lineare Spannungsregler 4,9,7 mit jeweils einem zugehörigen Transistor T4, T9, T7, sowie ein Schaltwandler 2 vorgesehen, dessen Funktion im Folgenden noch genauer erläutert werden wird. Der Linearregler 7,T7 zur Erzeugung der Nennspannung von 5V ist vesorgungsseitig an einem Knoten V2, parallel zum Schaltwandler 2 angeordnet und liegt über einen Schalter T6 und den Hauptschalter T5 an der Versorgungsspannung VB. Die beiden anderen, in Serie geschalteten Linearregler 4,T4, bzw. 9,T9 sind an einem Knoten V1 am Ausgang des Abwärtswandlers 2 angeschlossen und über einen Schalter T3 und den Hauptschalter T5 mit der Versorgungsspannung VB verbunden. Die Bezugszeichen 4 und 9 bzw. 7 bezeichnen dabei jeweils den eigentlichen Regler.

Die beiden Schalter T3, T6 sind Bestandteil einer Schalter-Anordnung, mittels der die Versorgungsspannung VB bzw. VZP wahlweise an den Eingang (Knoten V2) oder den Ausgang (bzw. anderen Eingang, Knoten V1) des Schaltwandlers 2 gelegt werden kann. Im Normalbetrieb, wenn die Versorgungsspannung VB größer ist als ein vorgegebener Schwellenwert, ist der Schalter T6 geschlossen (bzw. als Diode geschaltet) und der Schalter T3 geöffnet. Die Versorgungsspannung VB liegt somit am Eingang des Schaltwandlers 2 an, der die Spannung in eine niedrigere Spannung V1 (so genannte Vorregelspannung) wandelt. Der Schaltwandler 2 wird in diesem Zustand also als Abwärtswandler betrieben.

Die Vorregelspannung V1 hat typischerweise Werte, die knapp über der Ausgangsspannung U3V des nachfolgenden Linearreglers 4, T4 liegt, um somit die Verluste des Linearreglers 4,TG4 möglichst gering zu halten. Bei 3,3V-Verbrauchern am Knoten U3V liegt die Vorregelspannung V1 typischerweise bei etwa 4V.

Der Linearregler 4,T4 ist versorgungsseitig am Ausgang des Abwärtswandlers 2 angeschlossen. Der Schalter T3 ist masseseitig mit dem Ausgang des Abwärtswandlers 2 verbunden.

Der Schaltwandler 2 umfasst eine zwischen Eingang und Ausgang geschaltete Induktivität L und zwei Schalter T1,T2, mit denen die Induktivität L abwechselnd gegen das Eingangspotential V2 oder das Bezugspotential (Masse, GND) geschaltet wird. Ein parallel zum Ausgang geschalteter Glättungskondensator ist mit dem Bezugszeichen C bezeichnet. Die beiden Schalter T1,T2 werden von einer Steuerung 5 angesteuert. Während des Betriebs werden die Schalter T1,T2 gegensinnig getaktet und dadurch eine vorgegebene Ausgangsspannung erzeugt.

Wenn die Versorgungsspannung VB wegen eines Batteriefehlers unter eine vorgegebene Mindestspannung von z.B. 8V fällt, wird das Netzteil 1 in eine zweite Betriebsart umgeschaltet. Hierzu wird der Schalter T6 geöffnet bzw. als Diode geschaltet, und der Schalter T3 eingeschaltet. Die Versorgungsspannung liegt nun am Knoten V1 des Netzteils an. Der Knoten V2 ist dagegen von der Versorgungsspannung VB getrennt. Der Schaltwandler 2 wird in diesem Zustand als Aufwärtswandler betrieben. Die Steuerung 5 schaltet vom Abwärtsbetrieb in den Aufwärtsbetrieb um. Dadurch wird die am Knoten V1 des Wandlers 2 anliegende Spannung in eine höhere Ausgangsspannung transformiert, die nun am Knoten V2 anliegt. Der Schalter T1 ist im Aufwärtsbetrieb vorzugsweise als Diode geschaltet, kann aber auch in einem aktiven Freilauf betrieben werden.

Sofern die Eingangsspannung V1 noch ausreichend groß ist, kann sie mit Hilfe der Linearregler 4,T4 und 9,T9 in die gewünschte Ausgangsspannung (3,3V bzw. 1,5V) gewandelt werden. Die genannten Regler benötigen für den Betrieb nur sehr niedrige Eingangsspannungen und können damit auch bei Unterspannung VB sehr lange betrieben werden, müssen also nicht an den Knoten V2. Am Knoten V2 wird eine höhere Spannung bereitgestellt, die wenigstens so hoch ist, dass an den Ausgängen U5V und UVB angeschlossene Verbraucher nicht ausfallen. Der Ausgang UVB liegt über einem Schalter T8 und ein Interface T10 am Knoten V2.

Bei Versorgungsspannungen VB, die deutlich niedriger sind als die Nennspannung von z.B. 13V, jedoch die Schaltschwelle zum Umschalten in den Notbetrieb (bzw. die zweite Betriebsart) nicht unterschreiten, kann der Schalter T3 auch in einem so genannten Sourcefolge-Modus betrieben werden. Am Knoten V1 kann somit eine gewünschte Spannung erzeugt werden. Der Schaltwandler 2 ist in diesem Zustand inaktiv und der Schalter T6 geöffnet. Die an den Knoten U3V und U1V5 angeschlossenen Verbraucher werden dabei über den Schalter T3 und die Linearregler 4,T4 und 9,T9 mit Leistung versorgt.

## Patentansprüche

1. Netzteil, insbesondere für Kfz-Bordnetze, zum Wandeln einer Eingangsspannung (VB) in eine oder mehrere Ausgangsspannungen (V5V, U3V, U1V5), umfassend einen Schaltwandler (2) mit einer Induktivität (L) und mehreren Schaltern (T1,T2), mit denen die Induktivität (L) wahlweise gegen ein Versorgungspotential (V2) oder ein Bezugspotential (GND) geschaltet werden kann, **dadurch gekennzeichnet, dass** der Schaltwandler (2) in einem Normalbetrieb als Abwärtswandler, und in einer zweiten Betriebsart, wenn die Eingangsspannung (VB) einen vorgegebenen Schwellenwert unterschreitet, als Aufwärtswandler betrieben wird.

2. Netzteil nach Anspruch 1, **dadurch gekennzeichnet, dass** eine Schalter-Anordnung (T3,T6) vorgesehen ist, mittels der die Eingangsspannung (VB) im Normalbetrieb an den Eingang (V2) des Abwärtswandler (2), und in der zweiten Betriebsart an den Eingang (V1) des Aufwärtswandlers (2) geleitet werden kann.

3. Netzteil nach einem der vorhergehenden Ansprüche, **dadurch gekennzeichnet, dass** die Schalter-Anordnung (T3,T6) einen zwischen einem Versorgungseingang (VB) des Netzteils (1) und dem Eingang (V2) des Abwärtswandlers (2) angeordneten Schalter (T6) umfasst, mit dem die Eingangsspannung (VB) auf den Eingang des Abwärtswandlers (2) schaltbar ist.

4. Netzteil nach einem der vorhergehenden Ansprüche, **dadurch gekennzeichnet, dass** die Schalter-Anordnung (T3,T6) einen zwischen einem Versorgungseingang (VB) des Netzteils (1) und dem Eingang (V1) des Aufwärtswandlers (2) angeordneten Schalter (T3) umfasst, mit dem die Eingangsspannung (VB) auf den Eingang des Aufwärtswandlers (2) schaltbar ist.

5. Netzteil nach Anspruch 1 oder 2, **gekennzeichnet durch** einen Linearregler (T4,4), der mit dem Ausgang (V1) des Abwärtswandlers (2) verbunden ist und dessen Ausgangsspannung (V1) in eine niedrigere Spannung (U3V) wandelt.

6. Netzteil nach Anspruch 5, **gekennzeichnet durch** einen zweiten Linearregler (T9,9) vorgesehen ist, der mit dem ersten Linearregler (T4,4) seriell verbunden ist und die Ausgangsspannung (U3V) des ersten Linearreglers (T4,4) in eine niedrigere Spannung (U1V5) wandelt.

7. Netzteil nach einem der vorhergehenden Ansprüche, **dadurch gekennzeichnet, dass** ein Linearregler (T7,7) vorgesehen ist, der parallel zum Schaltwandler (2) angeordnet ist und die Eingangsspannung (VB) im Normalbetrieb auf eine gewünschte niedrigere Spannung (U5V) regelt.

8. Netzteil nach Anspruch 4, **dadurch gekennzeichnet, dass** der Schalter (T3) in einen Sourcefolge-Betrieb schaltbar ist.

9. Netzteil nach einem der vorhergehenden Ansprüche, **dadurch gekennzeichnet, dass** der Schaltwandler (2) zwei Schalter (T1,T2) umfasst, von denen einer an einem Versorgungspotential (V2), und der andere (T2) an einem Referenzpotential angeschlossen ist.

10. Netzteil nach Anspruch 9, **dadurch gekennzeichnet, dass** die Induktivität (L) an einem Mittenknoten der beiden Schalter (T1,T2) angeschlossen ist.

11. Verwendung eines Netzteils gemäß einem der vorhergehenden Ansprüche in einem Kraftfahrzeug zur Versorgung verschiedener elektrischer Verbraucher.
